# EUROPEAN PATENT APPLICATION

(11) **EP 1 708 530 A1**
(43) Date of publication of application: **04.10.2006**
(21) Application number: 06004429.4
(22) Date of filing: 04.03.2006
(51) Int. Cl.: H04Q 7/38

(54) **Method and apparatus for implementing voice group call service and data group call service by circuit switch or packet switch respectively in mobile network**

(30) Priority: 29.03.2005 CN 200510024736
(71) Applicant: Alcatel, 75008 Paris (FR)
(72) Inventor: Qian, Enyuan c/oAlcatel Shanghai Bell 388, 201206 Shanghai (CN); Wang, Songhai c/oAlcatel Shanghai Bell 388, 201206 Shanghai (CN); Song, Jun c/oAlcatel Shanghai Bell 388, 201206 Shanghai (CN); Zhang, Yi c/oAlcatel Shanghai Bell 388, 201206 Shanghai (CN); Qin, Xiaofeng c/oAlcatel Shanghai Bell 388, 201206 Shanghai (CN)
(74) Representative: Schäfer, Wolfgang

(57) **Abstract**

The present invention provides a method and corresponding apparatus for multimedia group call service in mobile network. According to the present invention, voice group call is established by circuit switch while data group call is established by packet switch. Compared with the prior art, the solutions disclosed in the present invention can shorten the "Call Setup latency" and "Intra-call latency" when performing voice group call and can provide better link quality.

## Description

### Technical Field

The present invention relates to mobile communication, more particularly, relates to the method and apparatus for multimedia group call service in mobile network.

### Background of Invention

Multimedia Group Call Service (MGCS) is a service that a talker can speak and send data (such as photos, pictures) to other listeners in the same group with him. 3GPP standard has defined Voice Group Call Service (VGCS), which only limits to voice service while MGCS is extending voice service to multimedia (voice, data) service.

If MGCS's implementation considers the efficiency of radio resource, 3GPP need to further define new signalling or add provision fields into the current signallings.

If MGCS's implementation need not consider the efficiency of Radio Resource, current 3GPP standard need not be changed, and the Voice Quality and spectrum efficiency are better than current Push-To-Talk, but a Multimedia Group Call Service should be configured in the core network.

Currently, there is a Push-To-Talk Service that can support voice group call service and data group call service simultaneously. Because Push-To-Talk is based on VoIP, due to the bandwidth limitation of GSM/GPRS network, the "Call Setup latency" and "Intra-call latency" is very long and intolerable. Moreover, the QoS of Push-To-Talk Service is not guaranteed, because there is no network mechanism to support it. This will be settled after the introduction of IMS (after Rel 5).

Furthermore, though 3GPP has defined VGCS standard, but only voice service is considered.

The present invention is provided to solve the foresaid problems of the prior art.

### Summary of Invention

The object of the present invention is to provide a solution for multimedia group call service in mobile network to overcome the drawbacks of the prior art. Wherein, voice group call can be established by circuit switch (in MSC) while data group call can be established by packet switch (in SGSN).

According to the first aspect of the present invention, a method for multimedia group call service in a base station of mobile network, characterized in that, if said multimedia group call service is voice group call service, then establishing said voice group call service by circuit switch; and if said multimedia group call service is data group call service, then establishing said data group call service by packet switch.

According to the second aspect of the present invention, a base station for multimedia group call service in mobile network, characterized in that, if said multimedia group call service is voice group call service, then said voice group call service will be established by circuit switch; if said multimedia group call service is data group call service, said data group call service will be established by packet switch.

According to the third aspect of the present invention, a method for multimedia group call service in a mobile station of mobile network, characterized in that, if said multimedia group call service is voice group call service, then establishing said voice group call service by circuit switch; and if said multimedia group call service is data group call service, then establishing said data group call service by packet switch.

According to the fourth aspect of the present invention, a mobile station for multimedia group call service in mobile network, characterized in that, if said multimedia group call service is voice group call service, then said voice group call service will be established by circuit switch; if said multimedia group call service is data group call service, said data group call service will be established by packet switch.

Compared with the prior art, in the present invention, voice group call can be established by circuit switch (in MSC) while the data group call can be established by packet switch (in SGSN) simultaneously. In this way, the "Call Setup latency" and "Intra-call latency" can be shortened and, with the guaranteed QoS, the link quality is better than Push-To-Talk Service.

### Brief Description of Drawings

For a clearer understanding of the present invention, the invention will be described in detail with the reference to the attached drawings in which same or similar reference signs indicate same features:
- Figure 1: is the topology figure of a mobile network;
- Figure 2: shows an example of a talker starting a voice group call service according to the first preferred embodiment of the present invention;
- Figure 3: shows an example of a voice group call service being started for listeners according to the first preferred embodiment of the present invention;
- Figure 4: shows a flow chart of a talker starting a data group call service according to the first preferred embodiment of the present invention;
- Figure 5: shows a flow chart of a data group call service being started for listeners according to the first preferred embodiment of the present invention;
- Figure 6: shows a flow chart of a talker starting a data group call service according to the second preferred embodiment of the present invention;
- Figure 7: shows a flow chart of a data group call service being started for listeners according to the second preferred embodiment of the present invention;
- Figure 8: shows a flow chart of the method for multimedia group call service in a base station of mobile network;
- Figure 9: shows a flow chart of the method for starting a voice group call service for a mobile station as a talker;
- Figure 10: shows a flow chart of the method for starting a voice group call service for a mobile station as a listener;
- Figure 11: shows the flow chart of the method for starting a data group call service for a mobile station as a talker in a base station of mobile network according to the first preferred embodiment of the present invention;
- Figure 12: shows the flow chart of the method for starting a data group call service for a mobile station as a listener in a base station of mobile network according to the first preferred embodiment of the present invention;
- Figure 13: shows the flow chart of the method for starting a data group call service for a mobile station as a talker in a base station of mobile network according to the second preferred embodiment of the present invention;
- Figure 14: shows the flow chart of the method for starting a data group call service for a mobile station as a listener in a base station of mobile network according to the second preferred embodiment of the present invention;
- Figure 15: shows the block diagram of a base station for multimedia group call service in mobile network according to the present invention.

### Description of Preferred Embodiments

The preferred embodiments of the present invention as follow will be described in detail with reference of companying drawings. But, it should be understood that the present invention doesn't limit to the particular embodiments.

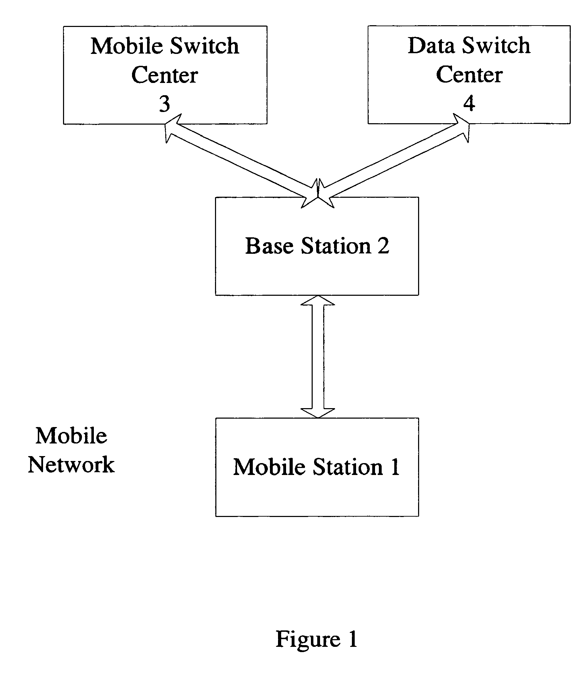

Figure 1 is a sketch map of a mobile network, comprising some mobile stations (MS) 1 (For simple, only one MS is shown in the figure), a Base Station System (BSS) 2, a Mobile Switch Center (MSC) 3 and a Service GPRS Support Node (SGSN) 4. MS 3 starts a multimedia group call service, BSS 2 establishes connection with MSC 3 or SGSN 4 according to that said multimedia group call service is a voice group call service or a data group call service so that voice group call service will be established by circuit switch and data group call service will be established by packet switch.

According to different efficiency in Radio Resource usage, the present invention provides two solutions.

The first preferred embodiment (with high efficiency in Radio Resource usage):

All listeners in a call will receive data via the same PDCH (Packet Data Channel).The benefit is that we can keep the GSM system's capability, but the disadvantage is that 3GPP standard should be modified accordingly; also, the Mobile station (MS)'s and networks' software should be impacted.

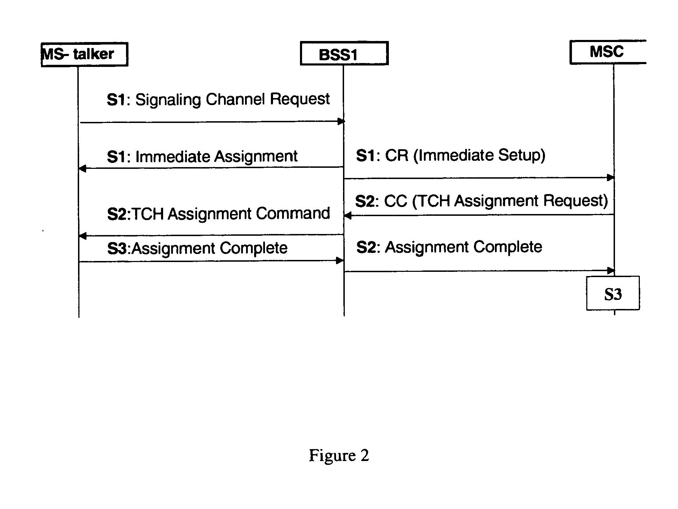

Figure 2-4 show the first preferred embodiment:
Wherein, Figure 2 shows the flow chart that a talker starts a voice group call service.

As shown in Figure 2, in step S1, MS (talker) 1 sends the "Channel Request" to BSS (Base Station System) 2, then BSS 2 allocates a SDCCH (Standalone Dedicated Control Channel) to MS 1 in manner of "Immediate Assignment".

In step S2, on the allocated SDCCH channel, MS 1 tells BSS 2 that it will initiate a voice group call service, and BSS 2 forwards it to MSC (Mobile Switch Center) 3, then MSC 3 sends "Assignment Request" (indicating the "talker") to BSS 2. After BSS 2 receives the "Assignment Request", it will allocate a TCH (Transport Channel) for the MS (talker) 1, and send "Assignment Request" to MS 1, MS will access via the new allocated TCH and reply "Assignment Complete".

In step S3, The talker's MSC 3 checks the Group Call information defined by the operator, then connects to all related MSCs 3 which are involved in the Group Call, and these related MSCs will further contact the related BSSs 2 managing the cells involved in said group call.

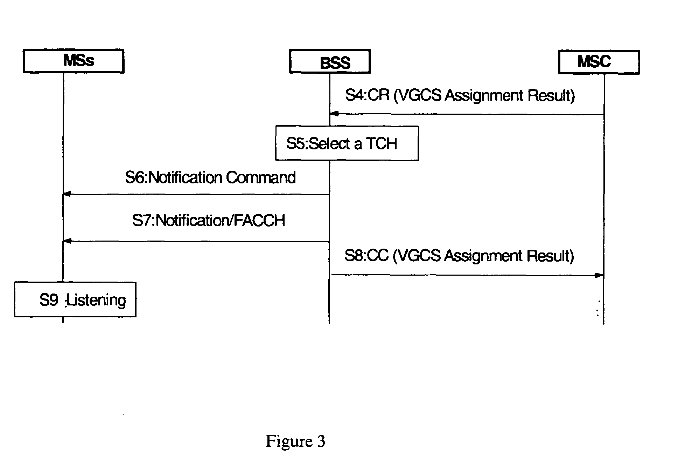

Figure 3 shows an example of starting a voice group call service for listeners:

As shown in Figure 3, in step S4, if several cells of a BSS 2 be all involved in said group call, MSC 3 would send "VGCS Assignment Request" to every cell.

In step S5, after BSS 2 receives the "VGCS Assignment Request", it will select and initiate a TCH (named as VGCH) for voice group call service.

In step S6, BSS 2 sends "Notification Command" to BTS, and then BTS will update the NCH (Notification Channel) information on BCCH (Broadcast Control Channel).

In step S7, BSS 2 sends "Notification" to notify all ongoing calls of the group call information.

In step S8, BSS 2 replies "VGCS Assignment Result" to MCS 3.

In step S9, all listeners in the cell now listen to the talker's voice.

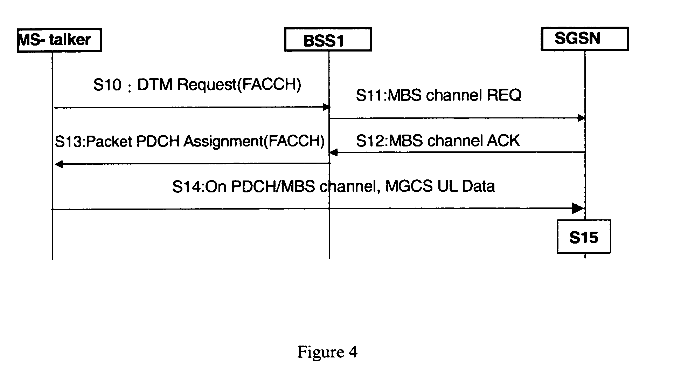

Figure 4 shows the flow chart that the talker starts a data group call service:

As shown in Figure 4, in step S10, MS (talker) 1 sends "DTM (Dynamic Synchronous Transfer Mode) Request" to initiate a data group call service.

In step S11, after BSS 2 receives the "DTM Request", BSS 2 will send "MBS (Multimedia Broadcast Service) Channel Request" to SGSN 4.

In step S12, SGSN 4 establishes a MBS channel between BSS 2 and SGSN 4, and replies "MBS Channel ACK" to BSS 2.

In step S13, BSS 2 selects a PDCH on the same TRX (Transport Unit) of the talker's TCH and send "Packet Assignment" to MS (talker) 1.

In step S14, on the PDCH, MS (talker) sends "MGCS UL Data" to BSS, and BSS forwards the data to SGSN on MBS channel, here, MGCS means Multimedia Group Call Service.

In step S15, the talker's SGSN will check the group call information defined by the operator, then broadcast the UL data to all related SGSNs which are involved in said group call, and all said related SGSNs will further contact the related BSSs which manage the cells involved in said group call.

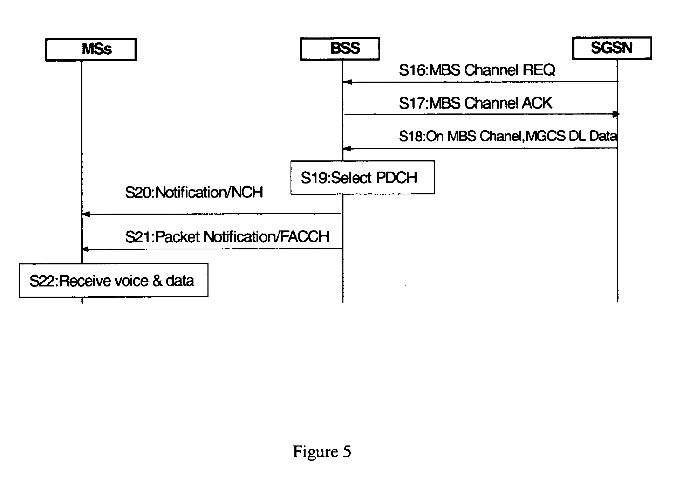

Figure 5 shows the flow chart of a data group call service being started for listeners:

As shown in Figure 5, in step S16, if several cells of a BSS are all involved in said group call, SGSN (Service GPRS Support Node) will send "MBS Channel REQ" to every cell.

In Step S17, BSS 2 establishes a MBS channel between BSS 2 and SGSN, then replies "MBS Channel ACK" to SGSN, here MBS means "Multimedia Broadcast Service".

In step S18, SGSN sends "MGCS DL Data" to said cell on the MBS Channel.

In step S19, after BSS 2 receives the "MGCS DL Data", it will select a PDCH which is on the same TRX of VGCH, and use it as PGCH (Packet Group Call Channel)

In step S20, BSS 2 sends "Notification Command" to BTS, then BTS will update the NCH information (including PGCH's location) on BCCH.

In step S21, BSS 2 sends "Packet Assignment" on VGCH/FACCH (Fast Access Control Channel) so that all listeners who are listening to the VGCH can know that PGCH has been established.

In step S22, all listeners can listen to both VGCH and PGCH, and Multimedia group call service is ongoing.

The second preferred embodiment (with low efficiency in Radio Resource usage)
Wherein, all listeners in the cells will use their private PDCHs to receive the DL data from the talker. The benefit is that 3GPP standard and MS's Software need not to be modified, only networks' software has a slight adaptation, the disadvantage is that the efficiency of radio resource usage is low, and Mobile communication system's capability will decrease.

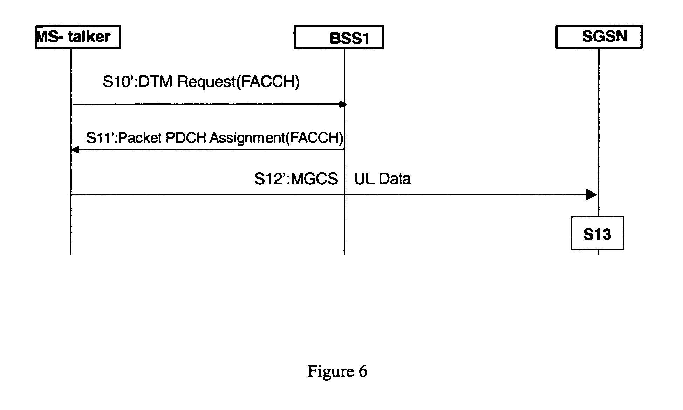

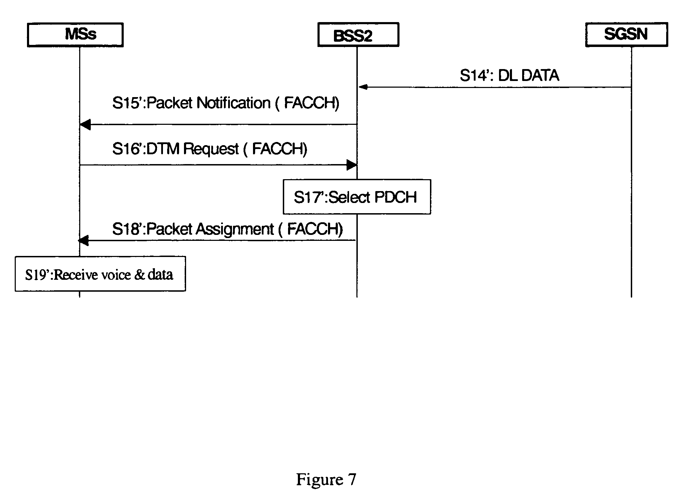

The steps S1-S8 in the second solution are the same as in the first one; other steps are shown in Figure 6 and 7.

Wherein, Figure 6 shows the flow chart that the talker starts a data group call service according to the second preferred embodiment of the present invention:
As shown in Figure 6, in step S10', MS (talker) sends "DTM Request" to initiate a data group call service.

In step S11', after BSS 2 receives the "DTM Request", it will select a PDCH which is on the same TRX of the talker's TCH, and then send "Packet Assignment" to MS (talker) 1.

In step S12', MS (talker) 1 sends "MGCS UL Data" to SGSN 4, here MGCS means Multimedia Group Call Service.

In step S13', SGSN 4 checks the group call information defined by the operator then forward the UL data to all related MSs which are involved in said group call.

Figure 7 shows the flow chart of starting a data group call for listeners according to the second preferred embodiment of the present invention:

As shown in Figure 7, in step S14', if several MSs in a BSS 2 are involved in said group call, SGSN 4 will send "DL Data" for every MS.

In step S15', after BSS 2 receives the "DL Data", if it finds that MS 1 is camping on the VGCH, it will send "Packet Notification" on the FACCH of VGCH to said MS 1.

In step S16', after receives the "Packet Notification", if MS 1 finds that said "Packet Notification" is sent for itself, MS 1 will send "DTM Request" on FACCH of VGCH.

In step S17', after BSS 2 receives the "DTM Request",it will select a PDCH which is on the same TRX of VGCH.

In step S18', BSS 2 puts the PDCH's information in "Packet Assignment", and then sends it to MS 1 on FACCH of VGCH.

In step S19', The MS (listener) 1 can listen to both VGCH and PGCH, then multimedia group call service is ongoing.

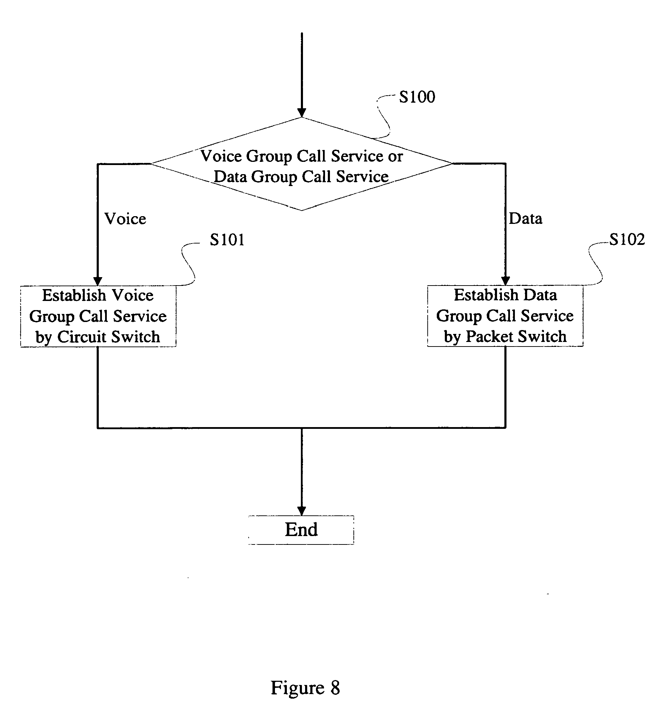

Figure 8 shows the flow chart of the method for multimedia group call service in a base station (BSS) 2 of mobile network:
Wherein, in step S200, determining said multimedia group call service is a voice group call service or a data group call service, if it is a voice group call service, proceed to step S201, if it is a data group call service, then proceed to step S202. In step S201, establishing said voice group call service by circuit switch, in step S202, establishing said data group call service by packet switch.

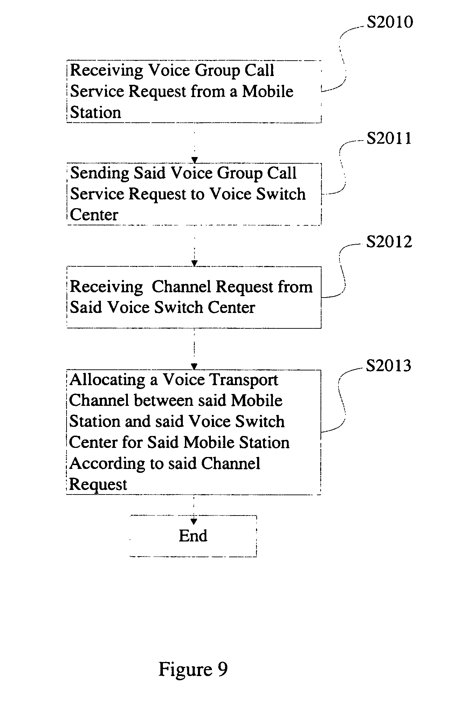

Figure 9 shows the flow chart of the method for starting a voice group call service for mobile station (MS) 1 as a talker in a base station (BSS) 2 of mobile network:
As shown in Figure 9, in step 2010, receiving the voice group call service request from the mobile station (MS) 1;

Then, in step S2011, sending said voice group call service request to Mobile Switch Center (MSC) 3;

In step S2012, receiving the channel request from MSC 3;

In step S2013, allocating a Voice Transport Channel between said MS 1 and the MSC 3 which said MS 1 belongs to for said MS 1 according to said channel request.

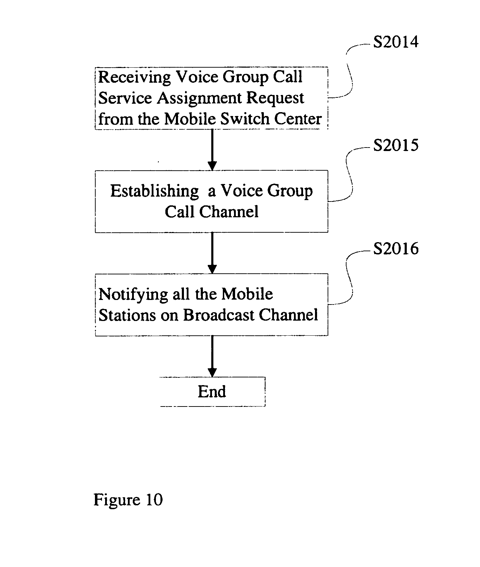

Figure 10 shows the flow chart of the method for starting a voice group call service for mobile station (MS) 1 as a listener in a base station (BSS) 2 of mobile network:
As shown in Figure 10, in step S2014, receiving voice group call service assignment request from the Mobile Switch Center (MSC);
Then, in step S2015, establishing a voice group call channel for voice group call service;
And then, in step S2016, notifying all the mobile stations of the group call information on the broadcast channel.

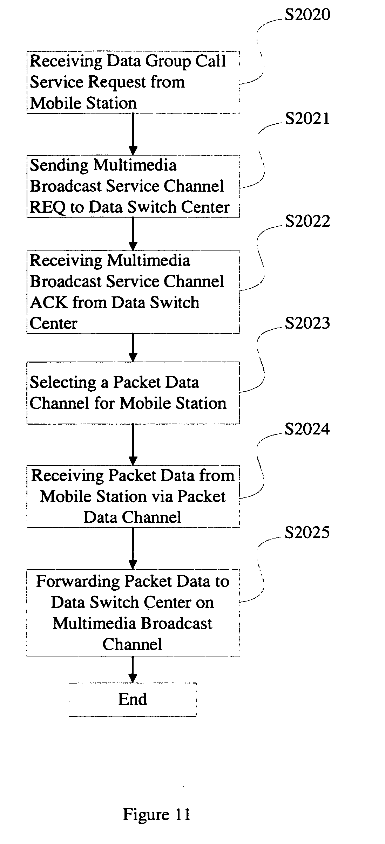

Figure 11 shows the flow chart of the method for starting a data group call service for a mobile station (MS) 1 as a talker in a base station (BSS) 2 of mobile network according to the first preferred embodiment of the present invention:
As shown in Figure 11, in step S2020, receiving the data group call service request from the mobile station (MS) 1;
In step S2021, sending "MBS (Multimedia Broadcast Service) Channel REQ" to data switch center (SGSN) 4;
In step S2022, receiving "MBS Channel ACK" from SGSN 4;
In step S2023, selecting a packet data channel for MS 1;
In step S2024, receiving packet data from MS 1 on packet data channel;
Then, in step S2025, forwarding the packet data to SGSN 4 via MBS channel.

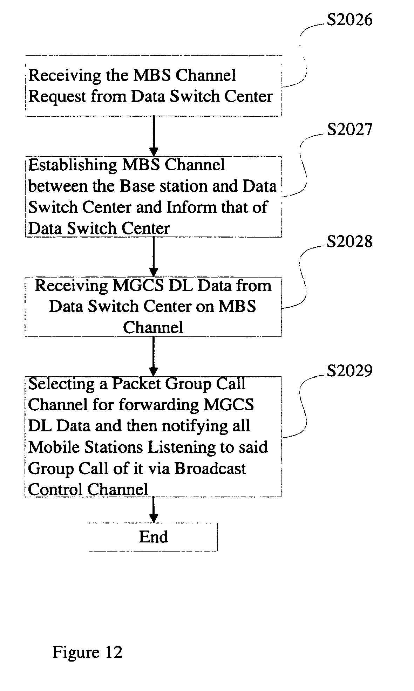

Figure 12 shows the flow chart of the method for starting a data group call service for a mobile station (MS) 1 as a listener in a base station (BSS) 2 of mobile network according to the first preferred embodiment of the present invention;
As shown in Figure 12, in step S2026, receiving the "MBS Channel REQ" from SGSN 4;
In step S2027, establishing a MBS channel between SGSN 4 and base station (BSS) 2 then notify SGSN 4 of it 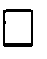
In step S2028, receiving "MGCS DL Data" from data switch center on MBS channel;

In step S2029, selecting a packet group call channel for forwarding "MGCS DL data", and notify all mobile stations which are listening to said group call on broad cast control channel.

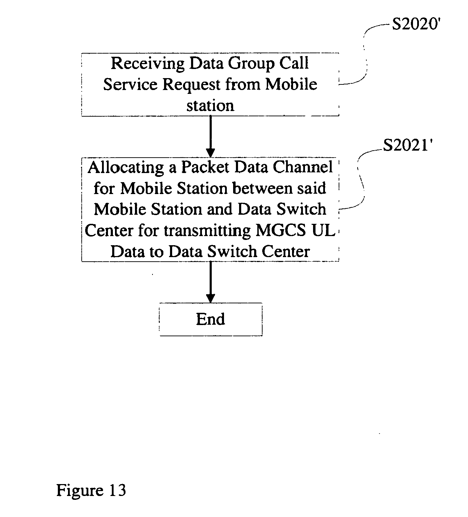

Figure 13 shows the flow chart of the method for starting a data group call service for a mobile station (MS) 1 as a talker in a base station (BSS) 2 of mobile network according to the second preferred embodiment of the present invention:
As shown in Figure 13, in step S2020', receiving a data group call service request from a mobile station;
Then, in step S2021', allocating a Packet Data Channel between said mobile station and data switch center for said mobile station to transmit MGCS UL data to data switch center thereon.

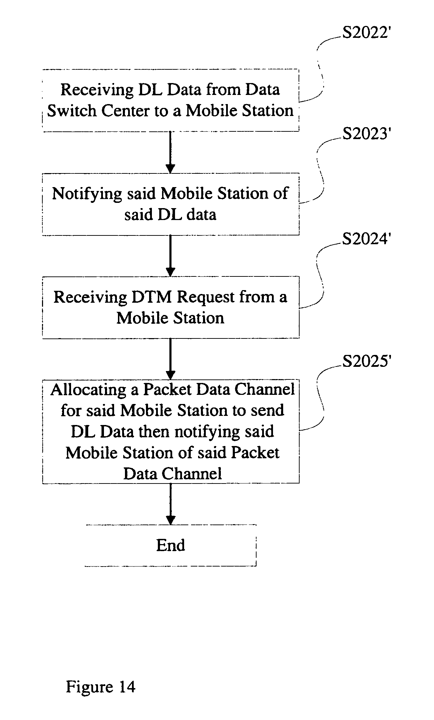

Figure 14 shows the flow chart of the method for starting a data group call service for a mobile station (MS) 1 as a listener in a base station (BSS) of mobile network according to the second preferred embodiment of the present invention:
As shown in Figure 13, in step S2022', receive DL data from data switch center to a mobile station;
In step S2023', notifying said mobile station;
In step S2024', receiving "DTM Request" from said mobile station;
In step S2025', allocating a Packet Data Channel for said mobile station to send DL data, and notifying said mobile station of said Packet Data Channel;

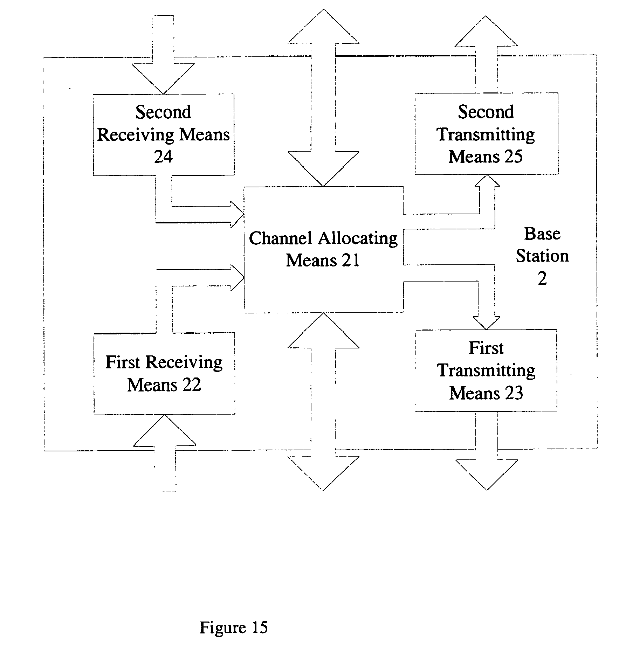

Figure 15 shows the block diagram of a base station (BSS) 2 for multimedia group call service in mobile network according to the present invention, characterized in that, if said multimedia group call service is a voice group call service, then said voice group call service will be established by circuit switch; and if said multimedia group call service is a data group call service, said data group call service will be established by packet switch.

Preferably, BBS 2 comprises a first receiving means 22 for receiving voice group call service request from a mobile station and; a channel allocating means 21 for allocating a Voice Transport Channel between said MS 1 and the Mobile Switch Center which said MS 1 belongs to for said MS according to said voice group call service request.

Preferably, BSS 2 further comprises a second receiving means 24 for receiving voice group call service request from the mobile switch center it belongs to; wherein, said channel allocating means 21 is further for allocating a Voice Group Call Channel for all mobile stations which are listening to said voice group call service in the cells under its control between them and the mobile switch center they belong to according to said voice group call service request from the mobile switch center it belongs to.

Preferably, in the BSS 2 shown in Figure 15, said first receiving means 22 is further for receiving data group call service request from a mobile station; said channel allocating means 21 is further for allocating a Packet Data Channel for said mobile station to transmit packet data; said first receiving device 22 is further for receiving group call packet data from said mobile station via said Packet Data Channel; wherein said BSS 2 further comprises a first transmitting means 23 for forwarding group call packet data from said mobile station to a data switch node which said BSS 2 belongs to via a Data Transport Channel between said BSS 2 and said data switch node.

Preferably, said second receiving means 24 is further for receiving data group call service request from the data switch node (SGSN) 4 it belongs to; said second receiving means 24 is further for receiving group call service data packet via the Data Transport Channel between said BSS 2 and said data switch node it belongs to according to said data group call service request from SGSN 4; said channel allocating means 21 is further for allocating a Data Broadcast Channel for all mobile stations which are listening to said data group call service in the cells under its control; wherein, BSS 2 further comprises a second transmitting means 25 for forwarding said group call service data to all mobile stations via said data broadcast channel, said mobile stations are receiving said data group call service.

More preferably, said second receiving means 24 is further for receiving data group call service request from the SGSN 4 which said BSS 2 belongs to; said second receiving device 24 is further for receiving group call service data packet via the Data Transport Channel between BSS 2 and said data switch node according to the data group call service request from SGSN 4; said channel allocating means 21 is further for allocating a private packet data channel for every MS 1 listening to said data group call service in the cells controlled by BSS 2; wherein, said Base Station further comprises a second transmitting means 25 for forwarding said group call service data to said every mobile station listening to said data group call service via said packet data channel.

The present invention further relates to a mobile station and a corresponding method for multimedia group call service in mobile network, characterized in that:
- if said multimedia group call service is a voice group call service, said voice group call service will be established by circuit switch; and
- if said multimedia group call service is a data group call service, said data group call service will be established by packet switch.

Although the present invention has been described in detail, it should be understood that the present invention does not limit to the foresaid preferred embodiments, various substitutions and alterations can be made hereto without departing from the spirit and scope of the invention as described by the appended claims..

## Claims

1. A method for multimedia group call service in a base station of mobile network, **characterized by** the steps of,
- if said multimedia group call service is voice group call service, then establishing said voice group call service by circuit switch; and
- if said multimedia group call service is data group call service, then establishing said data group call service by packet switch.

2. The method according to claim 1, **characterized in that**, said step of establishing said voice group call service by circuit switch further comprising the steps of:
- receiving voice group call service request from a mobile station;
- allocating a voice transport channel between said mobile station and the mobile switch center which said mobile station belongs to for said mobile station according to said voice group call service request from said mobile station.

3. The method according to claim 1 or 2, **characterized in that**, said step of establishing voice group call by circuit switch further comprising the steps of:
- receiving voice group call service request from the mobile switch center which said base station belongs to;
- allocating a voice group call channel for all mobile stations listening to said voice group call service in the cells controlled by said base station between said mobile stations and the mobile switch center they belong to.

4. The method according to anyone of claim 1-3, **characterized in that**, the step of establishing said data group call service by packet switch further comprising the steps of:
- receiving data group call service request from a mobile station;
- allocating a packet data channel for said mobile station for transporting packet data;
- receiving group call packet data from said mobile station via said packet data channel;
- forwarding said packet data to said data switch node via a data transport channel between said base station and the data switch node it belongs to.

5. The method according to anyone of claim 1-4, **characterized in that**, said step of establishing said data group call service by packet switch further comprising:
- receiving data group call service request from the data switch node which said base station belongs to;
- receiving group call service data packet via the data transport channel between the base station and said data switch node according to the data group call service request from said data switch node
- allocating a data broadcast channel for all mobile stations listening to said data group call service in the cells controlled by said base station;
- forwarding said group call service data via said data broadcast channel to all mobile stations listening to said data group call service.

6. The method according anyone of claim 1-4, **characterized in that**, said step of establishing said data group call service by packet switch comprising:
- receiving data group call service request from the data switch node which said base station belongs to;
- receiving group call service data packet via the data transport channel between said base station and the data switch node which said base station belongs to according to said data group call service request from the data switch node;
- allocating a packet data channel for every mobile station listening to said data group call service in the cells controlled by said base station;
- forwarding said group call service data to every mobile station listening to said data group call service via said packet data channel.

7. A base station for processing multimedia group call service in mobile network, **characterized in that**, if said multimedia group call service is a voice group call service, then said voice group call service will be established by circuit switch; and
if said multimedia group call service is a data group call service, said data group call service will be established by packet switch.

8. The base station according to claim 7, **characterized in that**, comprising:
a first receiving means for receiving voice group call service request from a mobile station;
a channel allocating means for allocating a Voice Transport Channel between said mobile station and the mobile switch center which said mobile station belongs to for said mobile station according to said voice group call service request.

9. The base station according to claim 7 or 8, **characterized in that**, further comprising:
a second receiving means for receiving voice group call service request from the mobile switch center it belongs to;
wherein,
said channel allocating means is further for allocating a Voice Group Call Channel for all mobile stations listening to said voice group call service in the cells under its control between said mobile stations and the mobile switch center they belong to according to said voice group call service request from the mobile switch center it belongs to.

10. The base station according to anyone of claim 7-9,
**characterized in that**,
said first receiving means is further for receiving data group call service request from a mobile station;
said channel allocating means is further for allocating a Packet Data Channel for said mobile station for transporting packet data;
said first receiving device is further for receiving group call packet data from said mobile station via said Packet Data Channel;
wherein, said base station further comprising,
a first transmitting means for forwarding group call packet data from said mobile station to a data switch node via a Data Transport Channel between said base station and said data switch node which said base station belongs to.

11. The base station according to anyone of claim 7-10,
**characterized in that**,
said second receiving means is further for receiving data group call service request from the data switch node it belongs to;
said second receiving means is further for receiving group call service data packet via the Data Transport Channel between the base station and and said data switch node according to said data group call service request from the date switch node;
said channel allocating means is further for allocating a data broadcast channel for all mobile stations listening to said data group call service in the cells under its control;
wherein, said base station further comprising,
a second transmitting means for forwarding said group call service data to all mobile stations via said data broadcast channel, said mobile stations are receiving said data group call service.

12. The base station according to anyone of claim 7-10,
**characterized in that**,
said second receiving means is further for receiving data group call service request from the data switch node which said base station belongs to;
said second receiving device is further for receiving group call service data packet via the data transport channel between said base station and said data switch node according to the data group call service request from said data switch node;
said channel allocating means is further for allocating a private packet data channel for every mobile station listening to said data group call service in the cells controlled by said base station;
wherein, said base station further comprising:
a second transmitting means for forwarding said group call service data to said every mobile station listening to said data group call service via said packet data channel.

13. A method for multimedia group call service in a mobile station of mobile network, **characterized by** the steps of,
if said multimedia group call service is voice group call service, then establishing said voice group call service by circuit switch; and
if said multimedia group call service is data group call service, establishing said data group call service by packet switch.

14. A mobile station for multimedia group call service in mobile network, **characterized in that**,
if said multimedia group call service is voice group call service, then said voice group call service will be established by circuit switch; and
if said multimedia group call service is data group call service, said data group call service will be established by packet switch.
